Europäisches Patentamt

European Patent Office

Office européen des brevets

Veröffentlichungsnummer: **0 299 189**

A1

# EUROPÄISCHE PATENTANMELDUNG

Anmeldenummer: **88108805.8**

Int. Cl.4: **F16D 55/14**

Anmeldetag: **01.06.88**

The title of the invention has been amended (Guidelines for Examination in the EPO, A-III, 7.3).

Priorität: **01.06.87 DE 8707800 U**

Veröffentlichungstag der Anmeldung:
**18.01.89 Patentblatt 89/03**

Benannte Vertragsstaaten:
**DE FR GB IT**

Anmelder: **LUCAS INDUSTRIES public limited company**
**Well Street**
**Birmingham, B19 2XF(GB)**

Erfinder: **Beuerle, Christoph**
**Südallee 71**
**D-5400 Koblenz(DE)**
Erfinder: **Hillen, Klaus**
**Dierdorfer Strasse 562**
**D-5450 Neuwied(DE)**
Erfinder: **Donnell, Derrick**
**17 Pond View Close**
**Heswall Wirral Merseyside L60 1YH(GB)**

Vertreter: **Goetz, Rupert et al**
**Patentanwälte Wuesthoff- v.**
**Pechmann-Behrens-Goetz Schweigerstrasse 2**
**D-8000 München 90(DE)**

## Vollbelag-Scheibenbremse.

Auf einer abzubremsenden Welle (20) sind, mit dieser gemeinsam drehbar, mindestens zwei Bremsscheiben (16, 18) angeordnet, und zwischen denen sind zwei Druckplatten (12, 14) angeordnet. In rampenartigen Vertiefungen (36, 38) der beiden Druckplatten (12, 14) sind Wälzkörper (40) angeordnet, welche die Druckplatten (12, 14) auseinanderspreizen, wenn diese gegeneinander verdreht werden. Zum gegensinnigen Verdrehen der beiden Druckplatten (12, 14) ist mindestens eine Betätigungsvorrichtung (50; 56) vorgesehen. Zwei Anschlagflächen (46, 48) begrenzen die Drehung je einer der Druckplatten (12, 14) in je einer Drehrichtung. Mindestens eine der Druckplatten (12, 14) ist auf der abzubremsenden Welle (20) durch ein Lager (34) zentriert. Dieses ist an einer Nabe (32) angeordnet, die auf der abzubremsenden Welle (20) sitzt und gemeinsam mit ihr drehbar ist.

FIG. 2

## Vollscheibenbremse

Die Erfindung betrifft eine Vollscheibenbremse mit
- mindestens zwei Bremsscheiben, die auf einer abzubremsenden Welle, mit dieser gemeinsam drehbar, angeordnet sind
- zwei Druckplatten, die zwischen den Bremsscheiben angeordnet sind,
- Wälzkörpern, die in rampenartigen Vertiefungen der beiden Druckplatten angeordnet sind und die Druckplatten auseinanderspreizen, wenn diese gegeneinander verdreht werden,
- mindestens einer Betätigungsvorrichtung zum gegensinnigen Verdrehen der beiden Druckplatten,
- zwei Anschlagflächen, welche die Drehung je einer der Druckplatten in je einer Drehrichtung begrenzen, und
- einer Anordnung zum Zentrieren der Druckplatten.

Bei einer bekannten Vollscheibenbremse dieser Gattung (DE-AS 1 239 897) sind die rampenartigen Vertiefungen am äußeren Umfang der Druckplatten angeordnet, und die in ihnen gelagerten Wälzkörper sind Kugeln, von denen jede mit ihrer radial äußeren Hälfte in eine axial gerichtete, im Querschnitt den Kugeln angepaßte Nut in einem radial nach innen vorspringenden Ansatz eines Bremsgehäuses gelagert sind. Die zum Zentrieren der Druckplatten erforderlichen radialen Führungskräfte werden somit über die Kugeln vom Bremsgehäuse auf die Druckplatten übertragen.

Bei einer anderen Vollscheibenbremse der beschriebenen Gattung (DE-OS 2 016 368) sind die Druckplatten ebenfalls an radial nach innen vorspringenden Ansätzen eines Bremsgehäuses zentriert. Dabei werden Reibungswiderstände gegen die zum Betätigen der Bremse erforderlichen Bewegungen der Druckplatten dadurch gering gehalten, daß entweder an jedem der radial nach innen vorspringenden Ansätze des Bremsgehäuses oder an den mit je einem solchen Ansatz zusammenwirkenden äußeren Randbereichen der Druckplatten je ein Einsatz aus einem Werkstoff mit niedrigem und im wesentlichen gleichbleibendem Reibungskoeffizienten angeordnet ist.

Das Prinzip, die Druckplatten über eine an ihrem äußeren Rand angeordnete Anordnung in bezug auf das Bremsgehäuse zu zentrieren, ist auch bei einer weiteren gattungsgemäßen Vollscheibenbremse beibehalten worden (DE-OS 2 700 669). Dort sind zur Zentrierung der beiden Druckscheiben rings um diese und parallel zu deren Drehachse drei zylindrische Rollen angeordnet. Eine dieser Rollen liegt in einer komplementären zylindrischen Ausnehmung in einem radial nach innen vorspringenden Ansatz des Bremsgehäuses.

Gegen diese Rolle um je 120° versetzt sind die beiden anderen zylindrischen Rollen in je einer Ausnehmung je eines Führungsbolzens gelagert. Die beiden Führungsbolzen erstrecken sich tangential zu den Druckplatten und sind in ihrer Längsrichtung verstellbar im Bremsgehäuse geführt.

Bei all diesen bekannten Vollscheibenbremsen der eingangs beschriebenen Gattung muß das Bremsgehäuse an den zum Zentrieren der Druckplatten vorgesehenen Stellen genau bearbeitet werden, was kostspielig ist. Der beim Bremsen entstehende Abrieb neigt dazu, sich an der Innenwand des Gehäuses abzusetzen, wobei auch die Stellen, an denen die Druckplatten zentriert sind, verschmutzen können. Dadurch kann sich im Laufe der Zeit der Widerstand gegen die für jede Bremsbetätigung erforderlichen Bewegungen der Druckplatten erheblich und in unkontrollierbarer Weise erhöhen.

Der Erfindung liegt deshalb die Aufgabe zugrunde, bei einer Vollscheibenbremse die Zentrierung der Druckplatten einfacher und weniger verschmutzungsempfindlich zu gestalten als bei den beschriebenen bekannten Bremsen.

Die Aufgabe ist erfindungsgemäß ausgehend von einer Vollscheibenbremse der eingangs beschriebenen Gattung dadurch gelöst, daß mindestens eine der Druckplatten auf der abzubremsenden Welle gelagert und dadurch zentriert ist.

Die erfindungsgemäße Zentrierung läßt sich mit geringem Aufwand bewirken, da die abzubremsende Welle ohnehin eine Gestaltung zum Zentrieren und Mitnehmen der Bremsscheiben aufweist, die in enger Nachbarschaft zu den Druckplatten angeordnet sind. Diese Gestaltung, beispielsweise ein Keilwellenprofil nach DIN 5461 bis 5464, das auch als Vielnutprofil bezeichnet wird, läßt sich mit nur geringem oder ganz ohne zusätzlichen Aufwand für die Zentrierung der Druckplatten mitverwenden. In einer einfachsten Ausführungsform können die Druckplatten unmittelbar auf den zylindrischen Kopfflächen eines solchen Keilwellenprofils gelagert sein. Der beim Bremsen entstehende Abrieb neigt nicht dazu, sich an der zentralen Welle anzulagern, so daß dort Verschmutzungsprobleme nicht zu erwarten sind.

Bei bevorzugten Ausführungsformen der Erfindung ist ein Lager für wenigstens eine der Druckplatten an einer Nabe angeordnet, die auf der abzubremsenden Welle sitzt und gemeinsam mit dieser drehbar ist.

Dabei genügt es, wenn an der Nabe nur eine Druckplatte gelagert ist und an dieser die andere Druckplatte über die in den rampenartigen Vertiefungen angeordneten Wälzkörper gelagert ist.

Als Alternative dazu kann vorgesehen sein, daß
- auf der Nabe eine Lagerbüchse drehbar und axial verschiebbar gelagert ist,
- eine Druckplatte auf der Lagerbüchse befestigt ist,
- die andere Druckplatte auf der Lagerbüchse drehbar und axial verschiebbar gelagert ist, und
- an der Lagerbüchse eine Feder abgestützt ist, welche die beiden Druckplatten axial zusammenspannt.

Beide im vorstehenden beschriebenen Ausführungsformen können dadurch weitergebildet sein, daß die Nabe als Verbindung mit der abzubremsenden Welle ein Vielnutprofil aufweist, das mit Vielnutprofilen an den Bremsscheiben übereinstimmt.

Ausführungsbeispiele mit weiteren Einzelheiten der Erfindung werden im folgenden anhand schematischer Zeichnungen erläutert. Es zeigt:

Fig. 1 eine Stirnansicht einer erfindungsgemäßen Vollscheibenbremse,

Fig. 2 den Schnitt II-II in Fig. 1,

Fig. 3 die Seitenansicht III in Fig. 1, und

Fig. 4 einen halbseitigen Axialschnitt durch eine Vollscheibenbremse in einer anderen erfindungsgemäßen Ausführungsform.

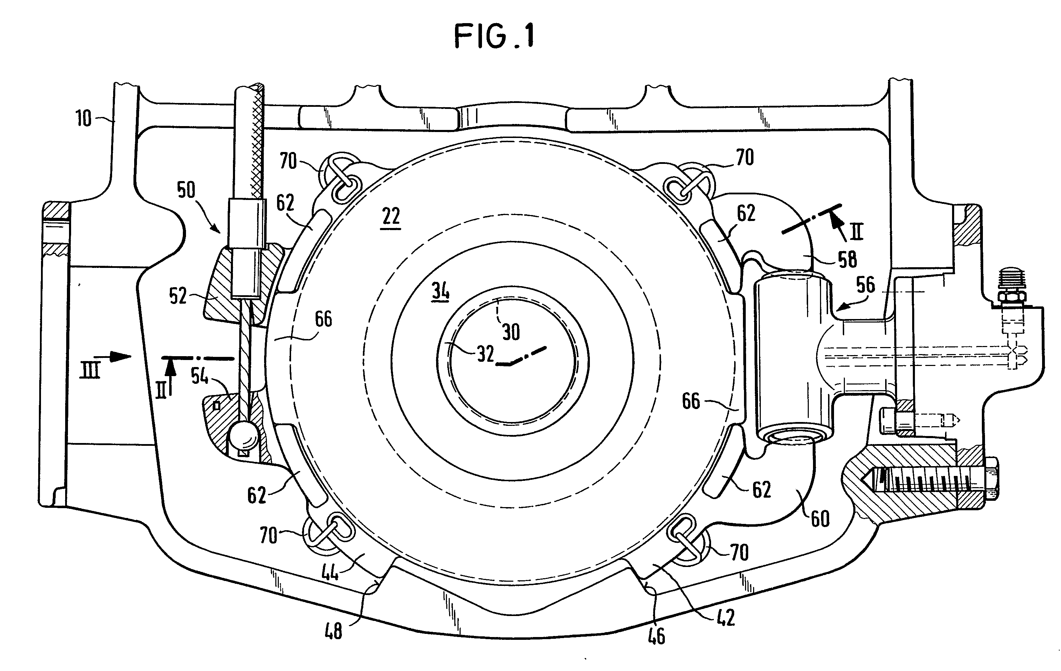

Die in Fig. 1 bis 3 dargestellte Vollscheibenbremse hat ein Gehäuse 10, das Bestandteil der Hinterachskonstruktion eines landwirtschaftlichen Schleppers ist. In dem Gehäuse 10 sind zwei Druckplatten 12 und 14 zwischen zwei Brems scheiben 16 und 18 angeordnet. Die beiden Bremsscheiben 16 und 18 sitzen axial verschiebbar auf einer abzubremsenden Welle 20, die in üblicher, nicht dargestellter Weise in an das Gehäuse 10 angebauten Lagergehäusen gelagert ist.

An der von der benachbarten Druckplatte 12 bzw. 14 abgewandten Seite der Bremsscheiben 16 und 18 ist je eine Zwischenplatte 22 bzw. 24 angeordnet, und daran schließt sich eine Stirnplatte 26 bzw. 28 an. Die Bremsscheiben 16 und 18 sowie die Stirnplatten 26 und 28 haben je ein Vielnutprofil 30, das in ein komplementäres Vielnut- oder Keilwellenprofil der Welle 20 eingreift. Während die Bremsscheiben 16 und 18 sich auf der Welle 20 axial verschieben lassen, sind die beiden Stirnplatten 26 und 28 durch Befestigungsmittel üblicher Bauart an der Welle 20 gegen eine axiale Verschiebung voneinander weg abgestützt.

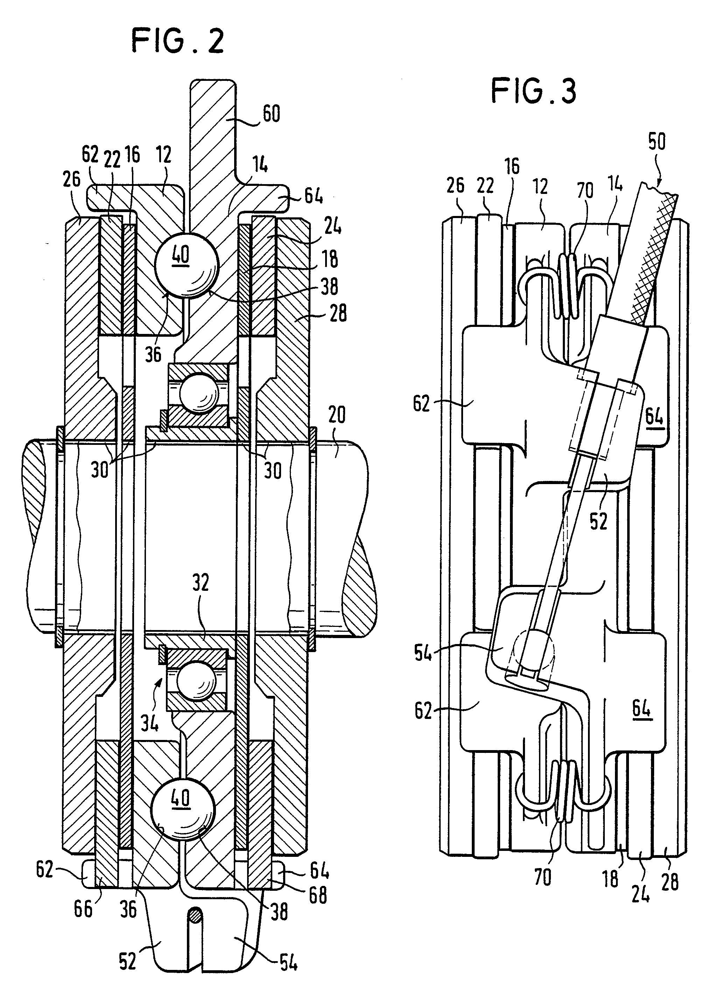

Mit einem Vielnutprofil 30, das mit demjenigen der Bremsscheiben 16 und 18 übereinstimmt, ist eine zwischen diesen angeordnete Nabe 32 mit der Welle 20 zu gemeinsamer Drehung, jedoch axial verschiebbar, verbunden. Auf der Nabe 32 ist gemäß Fig. 3 der Innenring eines Lagers 34 - im dargestellten Beispiel handelt es sich um ein Rillenkugellager - befestigt. Die Druckplatte 14 ist auf dem Außenring des Lagers 34 befestigt und somit über dieses und die Nabe 32 auf der abzubremsenden Welle 20 zentriert.

Die beiden Druckplatten 12 und 14 haben in der üblichen Weise an ihren einander zugewandten Stirnflächen je drei rampenartige Vertiefungen 36 bzw. 38, die einander paarweise gegenüberliegen. Jedes Paar Vertiefungen 36, 38 nimmt einen Wälzkörper 40 auf, der im dargestellten Beispiel eine Kugel ist. Werden die beiden Druckplatten 12 und 14 gegeneinander verdreht, so rollen die Wälzkörper 40 in Umfangsrichtung in den rampenartigen Vertiefungen 36 und 38 und spreizen die Druckplatten 12 und 14 axial auseinander. Infolgedessen wird jede der Druckplatten 12 und 14 mit der benachbarten Bremsscheibe 16 bzw. 18, Zwischenplatte 22 bzw. 24 und Stirnplatte 26 bzw. 28 zusammengespannt. Die dabei auf die Druckplatten 12 und 14 einwirkenden Bremsmomente sind bestrebt, beide Druckplatten gemeinsam in Drehrichtung der Welle 20 mitzunehmen.

Damit die beiden Druckplatten 12 und 14 in je einer Drehrichtung der Welle 20 gehindert sind, sich mit dieser zu drehen, weisen die Druckplatten 12 und 14 je einen radialen Vorsprung 42 bzw. 44 auf, dem eine radiale Anschlagfläche 46 bzw. 48 am Gehäuse 10 zugeordnet ist. Die beiden Anschlagflächen 46 und 48 haben keine andere Aufgabe als diejenige, eine Drehung der zugeordneten Druckplatte 12 bzw. 14 in je einer Drehrichtung nach Überwindung eines kleinen Spiels zu verhindern. Eine Führungsfunktion haben die Anschlagflächen 46 und 48 nicht, da die Druckplatte 12 ausschließlich über die Wälzkörper 40 an der Druckplatte 14 zentriert ist und diese ausschließlich über das Lager 34 und die Nabe 32 an der Welle 20 zentriert ist.

Die Druckplatten 12 und 14 lassen sich gegeneinander mit einer mechanischen Betätigungsvorrichtung 50 verdrehen; diese weist im dargestellten Beispiel einen Bowdenzug auf, dessen Mantel an einem radialen Betätigungsansatz 52 der Druckplatte 12 abgestützt ist, und dessen Kabel an einem entsprechenden Betätigungsansatz 54 der Druckplatte 14 angehängt ist.

Der mechanischen Betätigungsvorrichtung 50 diametral gegenüber ist eine hydraulische Betätigungsvorrichtung 56 in Gestalt einer Kolbenzylindereinheit angeordnet. Diese hat zwei gegenläufig verschiebbare Kolben, die mit je einem Betätigungsansatz 58 bzw. 60 der Druckplatten 12 und 14 zusammenwirken.

Jede der beiden Betätigungsvorrichtungen 50 und 56 wird im Betrieb, bei drehender Welle 20, von einer Servowirkung unterstützt, die dadurch zustandekommt, daß jede der beiden Bremsscheiben 16 und 18 ein Drehmoment auf die benachbarte Druckplatte 12 bzw. 14 ausübt, das je nach Drehrichtung der Welle 10 diejenige Druckplatte 12 oder 14, deren Vorsprung 42 bzw. 44 nicht gegen den zugehörigen Anschlag 46 bzw. 48 stößt, weiterdreht, wodurch die Druckplatten 12 und 14 noch stärker auseinandergespreizt werden und infolgedessen die Bremswirkung verstärkt wird.

Damit je nach Drehrichtung der Welle 20 die eine oder andere der beiden Zwischenplatten 22 und 24 ebenfalls zur Servowirkung der Bremse beiträgt, hat jede der beiden Druckplatten 12 und 14 Arme 62 bzw. 64, die in axialer Richtung über den äußeren Rand der benachbarten Bremsscheibe 16 bzw. 18 hinweg zwischen radiale Vorsprünge 66 bzw. 68 der zugehörigen Zwischenplatte 22 bzw. 24 eingreifen, so daß jede der beiden Zwischenplatten 22 und 24 sich nur gemeinsam mit der zugehörigen Druckplatte 12 bzw. 14 drehen kann. Die Zwischenplatten 22 und 24 sind über die Arme 62 bzw. 64 an der zugehörigen Druckplatte 12 bzw. 14 zentriert, so daß sie ebensowenig wie die Druckplatten 12 und 14 selbst einer Zentrierung am Gehäuse 10 bedürfen.

Bei dem Ausführungsbeispiel gemäß Fig. 1 bis 3 sind die beiden Druckplatten 12 und 14 in üblicher Weise durch an ihrem äußeren Rand angeordnete, im Ruhezustand der Bremse achsparallele Federn 70 zusammengespannt, wodurch die Wälzkörper 40 stets in Richtung auf die tiefsten Stellen der Vertiefungen 36 und 38 gedrängt werden.

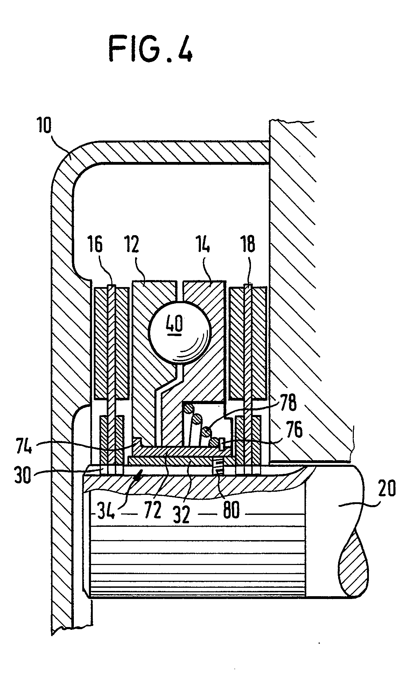

Bei der in Fig. 4 dargestellten Vollscheibenbremse bildet die Nabe 32 selber das Innenteil des Lagers 34, das hier ein Gleitlager ist. Das Außenteil des Lagers 34 ist von einer Lagerbüchse 72 gebildet, die auf der Nabe 32 drehbar und axial verschiebbar gelagert ist und einen Flansch 74 aufweist, an dem die Druckplatte 12 befestigt ist. Die Druckplatte 14 ist auf der Lagerbüchse 72 drehbar und axial verschiebbar geführt. Zwischen der Druckplatte 14 und einem an der Lagerbüchse 72 befestigten Sicherungsring 76 ist eine zentrale Feder 78 eingespannt, welche die in Fig. 1 bis 3 dargestellten Federn 70 ersetzt. Die Nabe 32 ist mit einem Gewindestift 80 auf der Welle 20 axial unverschiebbar festgeklemmt.

Das Ausführungsbeispiel gemäß Fig. 4 unterscheidet sich von dem in Fig. 1 bis 3 dargestellten ferner dadurch, daß die beiden Zwischenplatten 22 und 24 fortgelassen und die Stirnplatten 26 und 28 durch ortsfeste Wände des Gehäuses 10 ersetzt sind.

## Ansprüche

1. Vollscheibenbremse mit
- mindestens zwei Bremsscheiben (16, 18), die auf einer abzubremsenden Welle (20), mit dieser gemeinsam drehbar, angeordnet sind,
- zwei Druckplatten (12, 14), die zwischen den Bremsscheiben (16, 18) angeordnet sind.
- Wälzkörpern (40), die in rampenartigen Vertiefungen (36, 38) der beiden Druckplatten (12, 14) angeordnet sind und die Druckplatten (12, 14) auseinanderspreizen, wenn diese gegeneinander verdreht werden.
- mindestens einer Betätigungsvorrichtung (50; 56) zum gegensinnigen Verdrehen der beiden Druckplatten (12, 14),
- zwei Anschlagflächen (46, 48), welche die Drehung je einer der Druckplatten (12, 14) in je einer Drehrichtung begrenzen, und
- einer Anordnung zum Zentrieren der Druckplatten (12, 14) dadurch **gekennzeichnet**, daß mindestens eine der Druckplatten (12, 14) auf der abzubremsenden Welle (20) gelagert und dadurch zentriert ist.

2. Vollscheibenbremse nach Anspruch 1, dadurch **gekennzeichnet**, daß ein Lager (34) für wenigstens eine der Druckplatten (12, 14) an einer Nabe (32) angeordnet ist, die auf der abzubremsenden Welle (20) sitzt und gemeinsam mit dieser drehbar ist.

3. Vollscheibenbremse nach Anspruch 2, dadurch **gekennzeichnet**, daß an der Nabe (32) nur eine Druckplatte (14) gelagert ist und an dieser die andere Druckplatte (12) über die in den rampenartigen Vertiefungen (36, 38) angeordneten Wälzkörper (40) gelagert ist.

4. Vollscheibenbremse nach Anspruch 2, dadurch **gekennzeichnet**, daß
- auf der Nabe (32) eine Lagerbüchse (72) drehbar und axial verschiebbar gelagert ist.
- eine Druckplatte (12) auf der Lagerbüchse (72) befestigt ist.
- die andere Druckplatte (14) auf der Lagerbüchse (72) drehbar und axial verschiebbar gelagert ist, und
- an der Lagerbüchse (72) eine Feder (78) abgestützt ist, welche die beiden Druckplatten (12, 14) axial zusammenspannt.

5. Vollscheibenbremse nach einem der Ansprüche 2 bis 4, dadurch **gekennzeichnet**, daß die Nabe (32) als Verbindung mit der abzubremsenden Welle (20) ein Vielnutprofil (30) aufweist, das mit Vielnutprofilen (30) an den Bremsscheiben (16, 18) übereinstimmt.

# FIG.1

EP 0 299 189 A1

Lucas Ind. p.l.c.
EP-62 584

EP 0 299 189 A1

FIG . 2

FIG . 3

# FIG.4

| | **EINSCHLÄGIGE DOKUMENTE** | | EP 88108805.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | AU - B - 51 764/79 (POWELL)  * Fig. 8,10,11 *  -- | 1 | F 16 D 55/14 |
| A | DE - B2 - 2.745 905 (INTERNATIONAL HARVESTER CO.)  * Fig. 1,2 *  -- | | |
| A | DE - B2 - 2 018 728 (KLAUE)  * Fig. 1,2 *  ---- | | |

RECHERCHIERTE
SACHGEBIETE (Int. Cl.4)

F 16 D 55/00

Der vorliegende Recherchenbericht wurde für alle Patentansprüche erstellt.

| Recherchenort | Abschlußdatum der Recherche | Prüfer |
|---|---|---|
| WIEN | 21-07-1988 | KAMMERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82